Europäisches Patentamt

European Patent Office

Office européen des brevets

(19)

(11) Numéro de publication: **0 223 638**
**B1**

(12) **FASCICULE DE BREVET EUROPEEN**

(45) Date de publication du fascicule du brevet:
19.07.89

(51) Int. Cl.⁴: **F16M 11/06, H01Q 3/08**

(21) Numéro de dépôt: 86402140.7

(22) Date de dépôt: 01.10.86

(54) Dispositif pour orienter et positionner angulairement l'axe de rotation d'une charge tournante.

(30) Priorité: 02.10.85 FR 8514580

(43) Date de publication de la demande:
27.05.87 Bulletin 87/22

(45) Mention de la délivrance du brevet:
19.07.89 Bulletin 89/29

(84) Etats contractants désignés:
BE CH DE FR GB IT LI NL SE

(56) Documents cités:
EP-A- 0 114 588
EP-A- 0 123 012
EP-A- 0 153 884
WO-A-82/00218
DE-C- 3 306 056
FR-A- 2 039 484
FR-A- 2 251 699
US-A- 3 712 481

(73) Titulaire: SOCIETE NATIONALE D'ETUDE ET DE
CONSTRUCTION DE MOTEURS D'AVIATION,
"S.N.E.C.M.A.", 2 Boulevard Victor, F-75015 Paris(FR)

(72) Inventeur: Rebouillet, Marc Jean, 63, rue de la
République, F-92190 Meudon(FR)

(74) Mandataire: Moinat, François, S.N.E.C.M.A. Service des
Brevets Boîte Postale 81, F-91003 Evry Cédex(FR)

ACTORUM AG

## Description

La présente invention concerne un dispositif pour orienter et positionner angulairement l'axe de rotation d'une charge tournante.

Un tel dispositif se rapporte à tout appareillage comportant une charge tournant par intermittence équipée de moyens propres d'entraînement et d'analyse de rotation, et nécessitant une orientation et un positionnement angulaires de l'axe de rotation de cette charge par rapport à une orientation et un positionnement d'origine.

De tels appareillages présentent des applications dans des domaines différents tels que :
- les instruments de mesure et de contrôle
- les machines-outils
- la robotique
- les agitateurs à hélice
- les mécanismes d'orientation divers, par exemple les positionneurs d'ensembles radio-électriques ou optiques.

Cette énumération n'est pas limitative.

L'exemple décrit ci-après d'une application de la présente invention se rapporte à un positionneur d'antenne radio-électrique destinée à la visée dynamique des satellites non stationnaires.

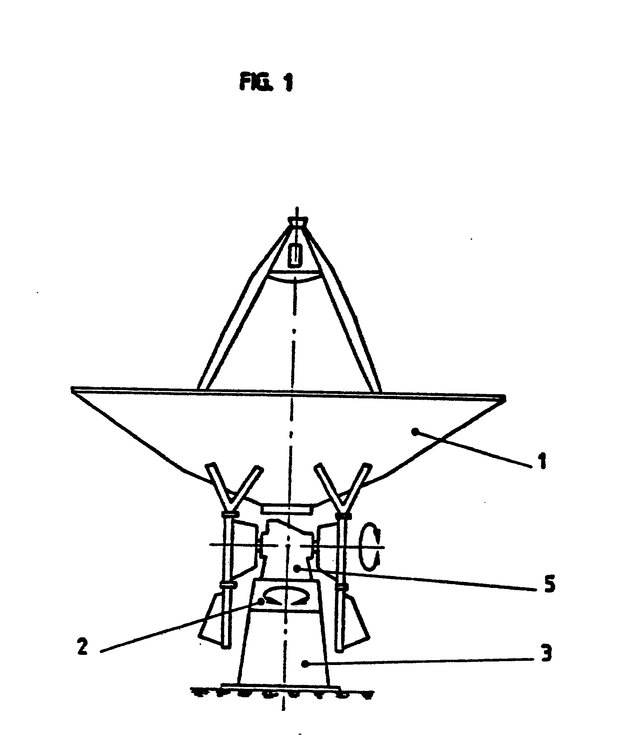

Les positionneurs d'antenne sont traditionnellement composés, voir figure 1, d'un élément fixe 3 constitué généralement d'une tour sur laquelle est monté un élément support de charge 2 dit "ensemble azimut". La partie supérieure de cet "ensemble azimut" (2) tourne autour de l'axe vertical, et sur cet élément support est fixé un "ensemble site" 5 comportant un axe horizontal qui permet l'articulation d'un "ensemble support d'antenne" 1 appelé "aérien".

Le plateau mobile de l'"ensemble azimut" 2 équipé de l'"ensemble site" 5 et de l'"aérien" 1 constitue la charge tournante.

La rotation de l'ensemble des éléments 1, partiellement 2 et 5, par rapport à la tour 3, est assurée ordinairement par une motorisation et son analyse par des moyens de mesure tels que codeurs angulaires, potentiomètres.

L'assemblage de l'"ensemble azimut" 2 sur la tour 3 s'effectue sur un plan horizontal.

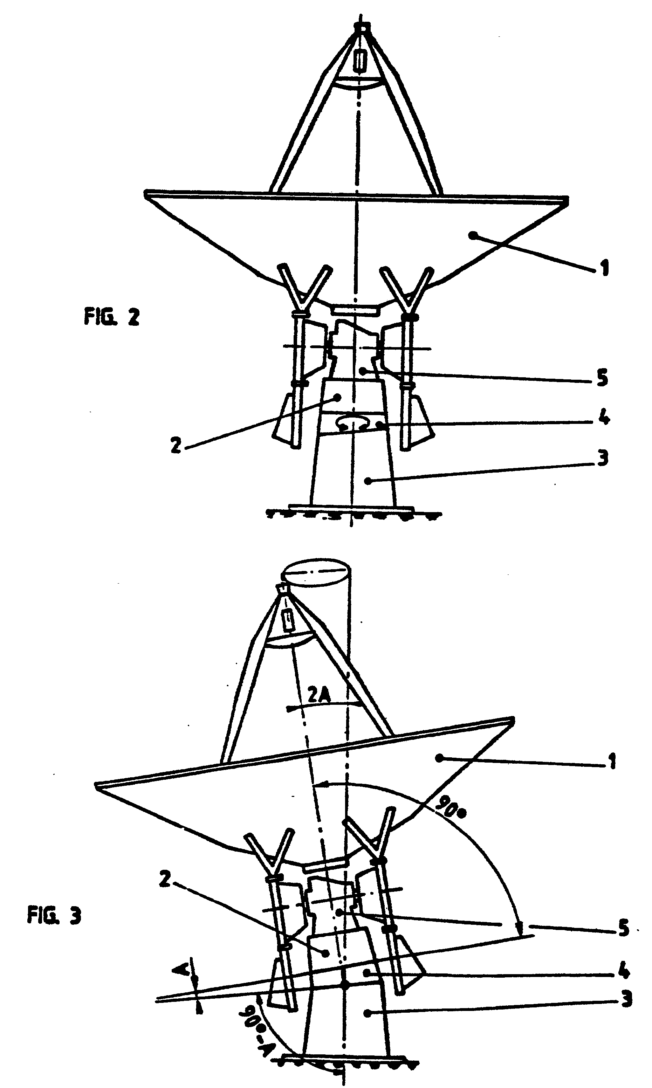

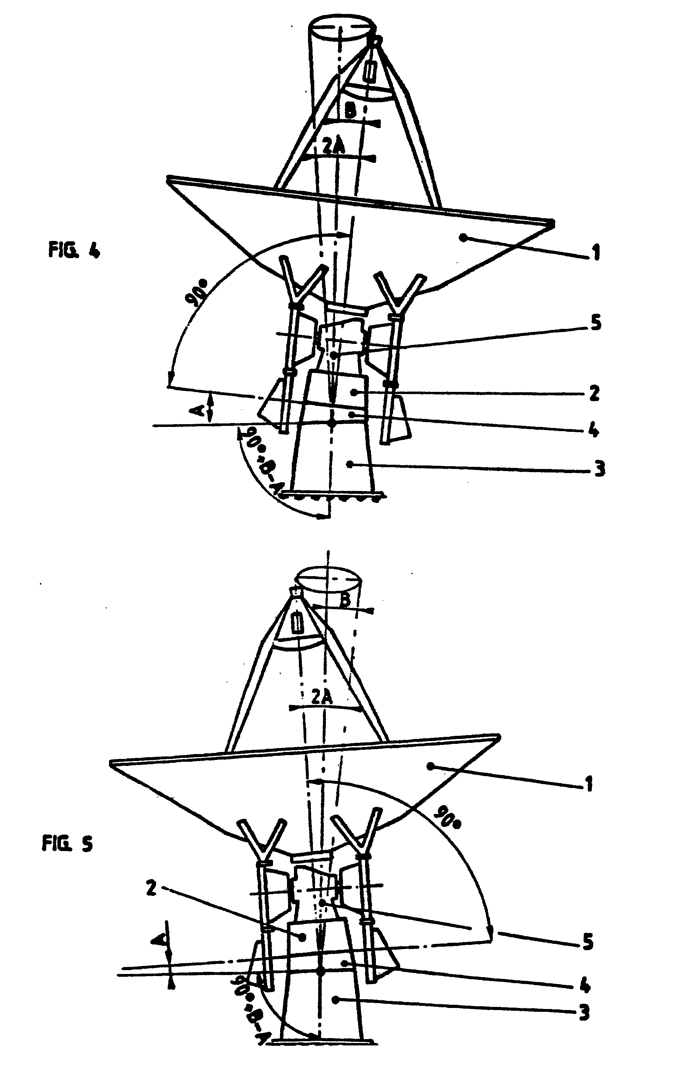

L'état actuel de l'art comprend, en outre, les types de positionnement d'antenne représentés aux figures 2 et 4, comportant un dispositif d'orientation et de positionnement.

Ces dispositifs comportent un élément intermédiaire supplémentaire 4 situé entre la tour 3 et l'"ensemble" azimut" 2, élément désigné par "coin" dans ce qui va suivre.

Le "coin" détermine deux plans d'assemblage et au moins l'un de ces plans est incliné par rapport au plan horizontal.

Les deux assemblages sont réalisés par des moyens permettant la rotation d'un élément par rapport à celui qui lui est adjacent.

Une position initiale est représentée à la figure 2 lorsque le "coin" 4 est disposé de telle manière que l'axe de l'ensemble azimut" 2 soit commun avec l'axe de la tour 3.

Une autre position de référence est représentée à la figure 4 lorsque le "coin" 4 est disposé de telle manière que l'axe de l'"ensemble azimut" 2 est décalé d'une valeur B par rapport à l'axe de la tour 3.

Les figures 3 et 5 représentent l'effet caractérisant l'utilisation habituelle du "coin". Une rotation de 180° du "coin" oriente angulairement l'axe d'origine des ensembles 1, 2 et 5 d'une valeur 2A égale au double de la valeur de l'angle A formé par les deux plans du "coin".

Dans le cas où l'orientation d'origine, voir figure 2, est confondue avec l'axe vertical de la tour 3, la nouvelle orientation est décalée d'un seul côté de cet axe de référence vertical, voir figure 3.

Dans le cas où l'orientation d'origine des ensembles 1, 2 et 5, voir figure 4, est décalée d'une valeur angulaire B inférieure à 2A par rapport à l'axe vertical de la tour 3, la nouvelle orientation est située dans le quadrant adjacent à celui contenant l'axe d'origine et est décalée, par rapport à l'axe vertical, d'un angle égal à 2A - B, voir figure 5.

Le cas particulier pour lequel l'angle B est égal à l'angle A assure deux orientations égales et opposées, par rapport à l'axe vertical de la tour 3, de valeur égale à A.

Cette dernière disposition étant la plus fréquemment utilisée, il est bien évident que tout autre calage du "coin" peut être effectué, de manière à ce que les deux orientations, par exemple soient situées dans le même quadrant.

Dans tous les cas, et pour les deux positions d'utilisation, les axes d'articulations de l'"aérien" 1 sur l'"ensemble site" 5 sont situés sur un même plan vertical.

Les positionneurs à "coin" comportant deux plans d'assemblage dont l'un est incliné par rapport à l'autre peuvent utiliser l'"ensemble azimut" 2 en le rendant solidaire de la tour 3.

La motorisation entre le "coin" 4 et l'"ensemble azimut" 2 et l'existence d'un palier non motorisé sur le plan d'assemblage incliné situé entre le "coin" et la tour 3, permet le positionnement angulaire de la charge utile.

Cette disposition assure bien une orientation angulaire de l'axe du "plateau azimut" 2 par rotation du "coin 4, mais présente l'inconvénient d'annihiler la rotation relative de ces deux éléments et nécessite l'utilisation d'un assemblage tournant supplémentaire pour assurer la rotation de l'"aérien" 1.

On connaît déjà par le FR-A 2 039 484, un dispositif pour orienter et positionner angulairement l'axe de rotation d'une charge tournante. Ce dispositif comporte un élément fixe de base, un élément intermédiaire et un élément support de charge. L'élément intermédiaire peut tourner par rapport à l'élément de base autour d'un premier axe incliné par rapport au plan horizontal. L'élément support de charge peut tourner par rapport à l'élément intermédiaire autour d'un deuxième axe incliné par rapport au premier. Mais ce dispositif nécessite, pour sa mise en œuvre, un double système de moyens d'entraînement. Des premiers moyens assurant la rotation relative de l'élément support de charge par rapport à l'élément intermédiaire, tandis que des seconds moyens assurent la rotation relative de l'élément intermédiaire par rapport à l'élément fixe de base.

La présente invention a pour objet un dispositif du genre ci-dessus mais ne nécessitant qu'un seul moyen d'entraînement pour orienter:

– soit l'élément support de charge par rapport à l'élément intermédiaire,

– soit l'élément intermédiaire par rapport à l'élément fixe de base.

La présente invention a pour but d'orienter et de positionner l'axe de rotation d'une charge tournant par intermittence en utilisant les moyens propres d'entraînement et d'analyse de positionnement de cette charge autour de l'axe de rotation de l'"ensemble azimut".

Le dispositif selon l'invention utilise la combinaison :

- d'un élément fixe de base possédant un axe de référence et un plan supérieur d'assemblage formant, par rapport à une perpendiculaire à cet axe, un angle différent de zéro ;

- d'un élément support de charge mobile angulairement, possédant un axe de référence autour duquel peut tourner la charge et un plan d'assemblage inférieur perpendiculaire à cet axe ;

- d'un élément intermédiaire, situé entre les deux éléments ci-dessus, possédant un axe de référence et deux plans d'assemblage ; le plan inférieur destiné à l'assemblage de l'élément fixe forme, par rapport à une perpendiculaire à l'axe de référence un angle différent de zéro égal à celui de l'élément fixe ; le plan supérieur destiné à l'assemblage de l'élément mobile est perpendiculaire à l'axe de référence;

- d'un moyen d'assemblage entre, d'une part l'élément fixe et l'élément intermédiaire et, d'autre part, entre l'élément support mobile et l'élément intermédiaire, cet assemblage permettant la rotation d'un élément par rapport à celui qui lui est adjacent ;

- d'un moyen d'entraînement en rotation relative de l'élément support mobile par rapport à l'élément intermédiaire ;

- d'un moyen permettant de solidariser l'élément mobile et l'élément fixe ;

- d'un moyen permettant de solidariser l'élément intermédiaire et l'élément fixe.

Dans une forme de réalisation avantageuse, ce dispositif comporte en outre un moyen d'analyse de la position angulaire relative de l'élément support par rapport à l'élément intermédiaire.

Selon une forme de réalisation préférentielle, le moyen d'assemblage entre deux éléments adjacent est constitué par des paliers ou une couronne, soit à billes, soit à rouleaux.

Selon une autre forme de réalisation, le moyen d'assemblage est un palier lisse.

Selon une autre forme de réalisation, l'assemblage est effectué par des galets tournants dans des supports solidaires d'un élément et roulant dans une glissière solidaire de l'élément adjacent.

Selon une forme de réalisation préférentielle, le moyen de déplacement de l'élément support en rotation relative comprend un élément moteur fixé sur l'élément intermédiaire et équipé d'un pignon denté engrénant avec une roue dentée solidaire de l'élément support mobile angulairement.

Selon une autre forme de réalisation du moyen de déplacement de l'élément support en rotation relative, l'élément moteur est fixé sur l'élément support mobile angulairement et la roue dentée est solidaire de l'élément intermédiaire.

Selon une forme de réalisation préférentielle de la présente invention, l'élément moteur est un motoréducteur ou un moteur électriques.

Selon une variante, l'élément moteur est un moteur hydraulique.

Selon une autre forme de réalisation, le moyen de déplacement de l'élément support en rotation relative est manuel.

Le dispositif selon l'invention utilise le moyen de déplacement de l'élément support en rotation relative pour réaliser l'entraînement en rotation de l'élément intermédiaire lorsque l'élément support mobile angulairement est solidaire de l'élément fixe.

Selon une forme de réalisation préférentielle de la présente invention, le moyen d'analyse de la position angulaire de l'élément support est un élément de mesure rotatif, soit potentiométrique, soit incrémental, soit absolu, fixé sur le même élément que l'élément moteur et équipé d'un pignon denté engrénant avec la roue dentée solidaire, soit de l'élément support mobile angulairement, soit de l'élément intermédiaire, ou avec une roue dentée particulière solidaire de la précédente.

Le dispositif selon l'invention utilise le moyen d'analyse de la position angulaire de l'élément support pour analyser le positionnement angulaire de l'élément intermédiaire par rapport à une origine de positionnement de cet élément par rapport à l'élément fixe.

Selon une forme de réalisation préférentielle, le moyen permettant de solidariser l'élément support mobile angulairement et l'élément fixe est constitué par un frein à ruban situé dans le plan d'assemblage de l'élément fixe avec l'élément intermédiaire, fixé sur l'élément fixe et s'enroulant sur un tambour solidaire de l'élément support mobile angulairement.

Selon une autre forme de réalisation, le moyen de solidariser l'élément support mobile angulairement et l'élément fixe est un frein à machoires flexibles.

Selon une variante de cette autre forme de réalisation, le frein peut être à machoires rigides ou à disque si sa fixation est articulée.

Selon une autre forme de réalisation, le moyen de solidariser l'élément support mobile angulairement et l'élément fixe est constitué par au moins un pène, situé sur l'un des éléments s'engageant dans au moins une gache située sur un autre élément.

Selon une autre forme de réalisation, l'élément support mobile angulairement et l'élément fixe peuvent être solidarisés par la combinaison d'un frein et d'un ensemble pène-gache.

L'actionneur du frein ou de la gache peut être manuel, électromécanique, hydraulique ou pneumatique.

Selon une forme de réalisation préférentielle de la présente invention, le moyen permettant de solidariser l'élément intermédiaire et l'élément fixe est au moins un pène, situé sur l'un des deux éléments, s'engageant alternativement dans au moins une gache située sur l'autre élément.

Selon une autre forme de réalisation, ce moyen de solidarisation est un dispositif d'immobilisation, par exemple un frein, soit à ruban, soit à machoires, soit à disque, associé ou non à un ensemble pène-gache.

Selon une autre forme de réalisation, on utilise, pour solidariser l'élément support mobile angulairement et l'élément fixe, le verrouillage, dit "de survie", des bras d'équilibrage de l'"aérien" sur la tour.

La figure 2 montre l'ensemble d'un positionneur d'antenne, sur lequel les éléments, fixe, intermédiaire et support mobile angulairement, sont représentés dans une position d'origine confondue avec l'axe vertical de la tour 3.

La figure 3 montre le même ensemble sur lequel les mêmes éléments sont représentés dans une position telle que l'axe de rotation de la charge constituant l'élément mobile angulairement a pris une nouvelle orientation.

La figure 4 représente l'ensemble d'un positionneur d'antenne, application particulière de la présente invention, sur lequel la position d'origine est décalée d'une valeur angulaire B par rapport à l'axe vertical de la tour 3.

La figure 5 montre l'ensemble précédent dans sa seconde position d'utilisation.

La figure 6 représente, en coupe et à titre d'exemple, le dispositif selon l'invention, comportant tous les éléments et moyens combinés, les éléments, fixe, intermédiaire et support mobile angulairement étant positionnés pour obtenir la configuration d'ensemble de la figure 3.

La figure 7 représente un moyen permettant de solidariser deux éléments, constitués par un frein à ruban classique.

La figure 8 représente une variante classique d'un frein à ruban avec disposition différentielle.

La figure 9 représente un frein à machoires flexibles couramment utilisé dans d'autres applications.

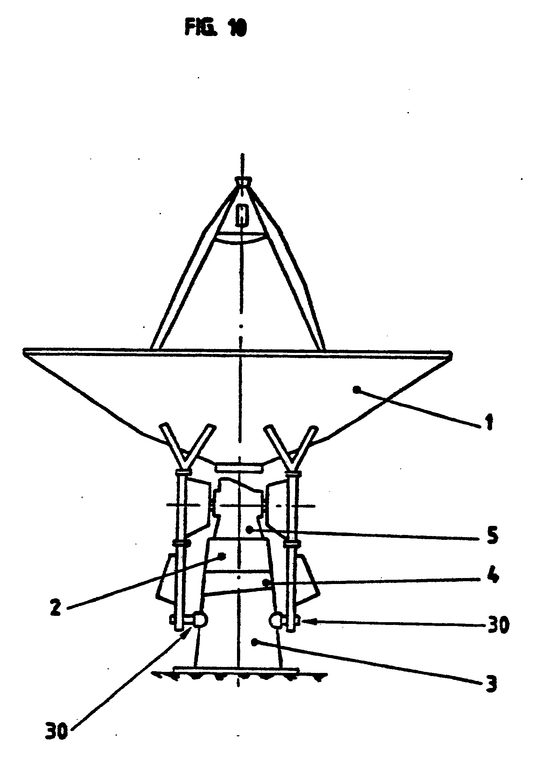

La figure 10 représente l'utilisation du verrouillage 30 dit "de survie" pour solidariser l'ensemble mobile angulairement et la tour.

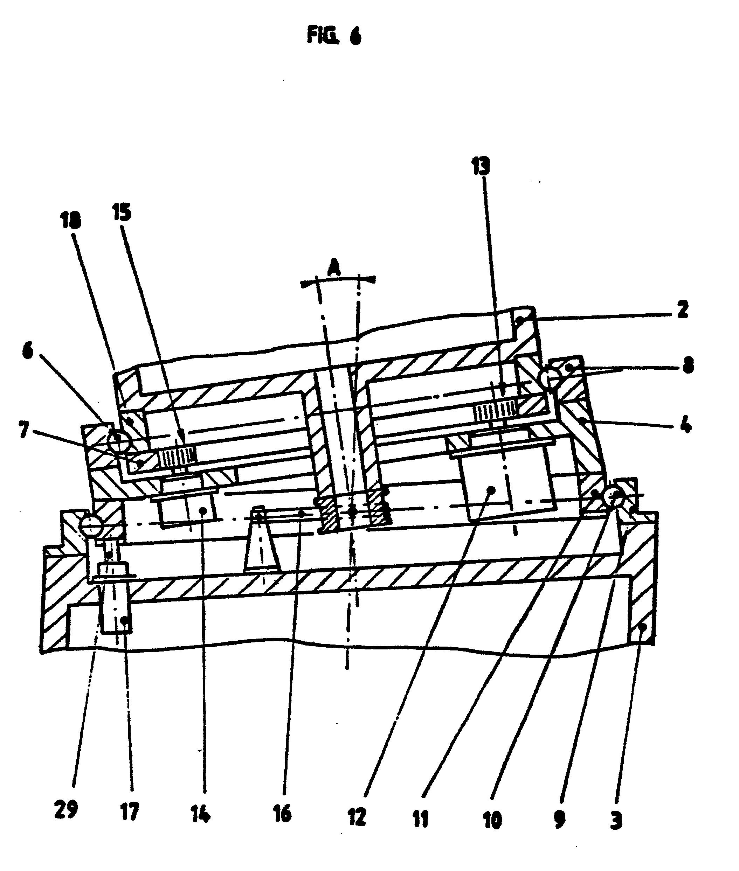

L'examen de la figure 6, donnée à titre d'exemple, permet de comprendre le fonctionnement du dispositif conforme à la présente invention.

Sur le plan supérieur d'assemblage de l'élément fixe de base 3, est fixé un moyen d'assemblage constitué par une couronne à billes 10 parallèle au plan d'assemblage. La cage interne 11 de cette couronne est fixée sur le plan d'assemblage incliné de l'élément intermédiaire 4.

Sur le plan inférieur d'assemblage de l'élément support mobile angulairement 2, est fixée la cage interne 18 d'un moyen d'assemblage constitué par une couronne à billes 6 parallèle au plan d'assemblage. La cage externe 8 de cette couronne est fixée à l'élément intermédiaire 4 sur le plan d'assemblage de cet élément.

Une couronne dentée 7 est rendue solidaire de l'élément support mobile angulairement 2 par sa fixation sur la cage interne 18 de la couronne à billes 6.

Un moto-réducteur 12, fixé sur l'élément intermédiaire 4 comporte un arbre de sortie sur lequel est claveté un pignon denté 13 engrenant avec la couronne dentée 7.

Un élément de mesure rotatif 14 comporte un arbre de sortie sur lequel est claveté un pignon denté 15 engrenant avec la couronne dentée 7.

Un actionneur 17 comporte un pène 29, mobile axialement, poussé par un ressort sur la face de la cage interne de la couronne à billes 10 que comporte deux encoches formant gache disposées à 180° degrés l'une de l'autre, et rappelé par un moyen moteur.

L'élément support mobile angulairement 2 présente sur son axe de rotation une saillie cylindrique ayant à son extrémité un tambour sur lequel s'enroule la bande 16 d'un frein situé dans le plan de rotation de l'élément intermédiaire 4 par rapport à l'élément fixe 3.

La position de ce tambour, représentée dans le plan de la couronne à billes repère 10, n'est pas limitative.

L'angle 2A, représenté exagéré sur les figures 3 et 5, étant très faible, le frein ne nécessite pas une perpendicularité parfaite entre le tambour et la bande du fait de l'élasticité de celle-ci et de l'accrochage rotulé de ses extrémités.

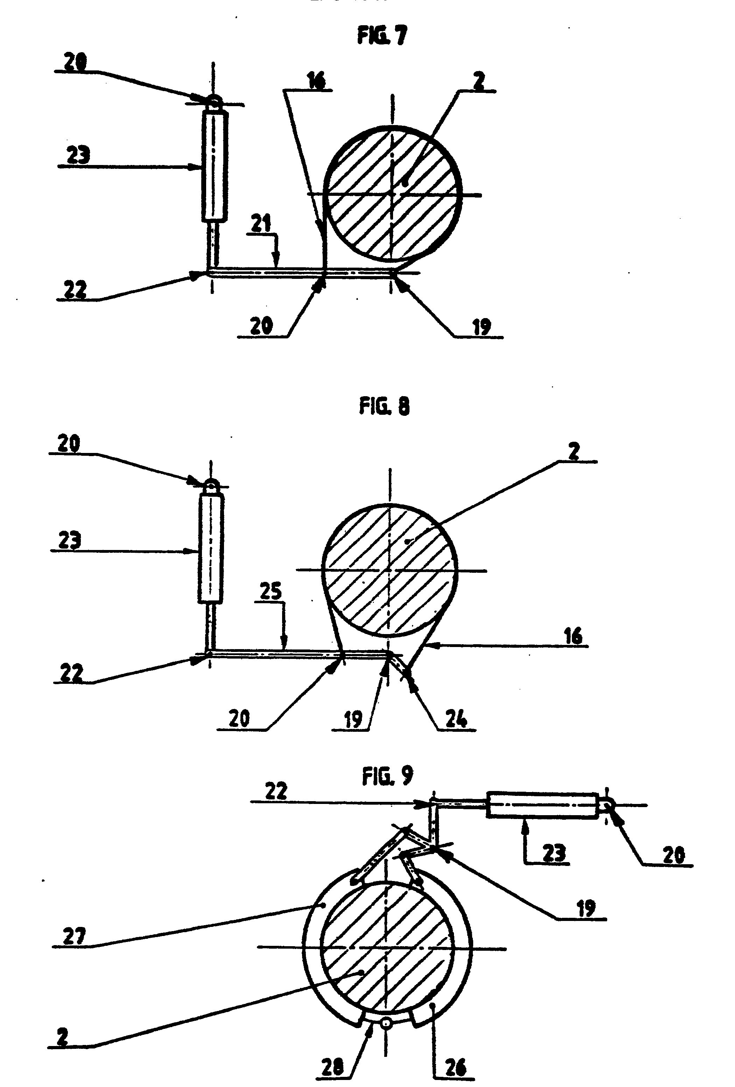

Une coupe dans le plan du frein est représentée figure 7. La bande 16 enroulée sur le tambour de l'élément mobile 2 est fixée à l'une de ses extrémités sur un pivot 19 solidaire de l'élément fixe et l'autre extrémité est attachée sur une articulation 20 située sur un levier 21 articulé lui-même sur le pivot 19. Un actionneur 23, articulé d'une part sur un pivot 20 solidaire de l'élément fixe et d'autre part sur l'axe d'extrémité 22 du levier 21, assure la tension de la bande qui provoque le freinage de l'élément support mobile angulairement 2.

La variante représentée figure 8 ne diffère que par sa disposition différentielle assurée par l'accrochage de la bande non pas sur le pivot 19 mais sur un axe rotulé 24 du levier 25.

La variante représentée figure 9 montre un frein à machoires 26 et 27 rendues flexibles par une jonction souple 28.

La figure 6 permet d'expliquer le fonctionnement du dispositif.

Dans la position représentée, l'axe de rotation de l'élément support mobile angulairement 2 est orienté d'une valeur angulaire 2A par rapport à sa position d'origine.

Dans cette position, l'élément intermédiaire 4 et l'élément fixe 3 de base étant solidarisés au moyen du pène 29 introduit dans la gache de la cage 11 et la bande 16 du frein n'étant pas tendue, l'élément support mobile angulairement 2 peut être déplacé en rotation, à partir de l'élément moteur 12, par le pignon 13 engrenant avec la couronne dentée 7. L'analyse angulaire de cette rotation est effectuée au moyen d'l'élément de mesure rotatif 14.

Pour ramener le dispositif dans sa position d'origine, l'élément support mobile angulairement 2 est immobilisé en rotation par la tension de la bande 16 du frein qui solidarise cet élément 2 avec l'élément fixe 3. Le pène 29 étant sorti de sa gache, l'élément intermédiaire 4 est libéré et est déplacé en rotation par le moyen moteur 12 dont le pignon 13 prend réaction sur la couronne dentée 7 rendu fixe.

Après une rotation de 180° analysée par l'élément de mesure 14, le pène 29 est introduit dans la gache de la cage 11 correspondante à cette nouvelle position, la bande 16 du frein est détendue et la rotation de l'élément 2 peut à nouveau s'effectuer à partir de l'élément moteur 12.

La position d'origine, représentée à la figure 2, est obtenue si les inclinaisons, par rapport à l'horizontale, des plans respectifs de l'élément intermédiaire 4 et de l'élément fixe 3 sont égales et ont pour valeur un angle égal à A.

L'orientation et le positionnement de la position d'origine jusqu'à la valeur A s'obtient de même en solidarisant l'élément 2 et l'élément 3, en libérant l'élément 4 de l'élément 3, en faisant pivoter ensuite de 180° l'élément 4 par rapport à l'élément 3, au moyen de la motorisation, en solidarisant l'élément 4 et l'élément 3, en libérant enfin l'élément 2 de l'élément 4.

Il est à remarquer que, si la rotation de l'élément intermédiaire est inférieure à 180°, la valeur de l'orientation peut être comprise entre 0 et la valeur 2A, mais que dans ce cas particulier, les axes d'articulation de l'"aérien" 1 ne sont plus dans le plan vertical d'origine. Cet inconvénient peut toutefois être corrigé par un recalage en site de cet "aérien" 1 en fonction de l'angle de rotation de l'élément intermédiaire 4.

Le dispositif selon l'invention est particulièrement destiné à l'orientation et au positionnement d'un positionneur d'antenne destinée à la visée dynamique des satellites non stationnaires mais peut trouver des applications dans tout système nécessitant l'orientation et le positionnement d'une charge tournant par intermittence.

**Revendications**

1. Dispositif pour orienter et positionner angulairement l'axe de rotation d'une charge (1) tournant par intermittence, comportant un élément fixe de base (3) possédant un axe de référence et un plan supérieur d'assemblage non perpendiculaire à cet axe, un élément support de charge (2) mobile angulairement possédant un axe de rotation et un plan inférieur d'assemblage perpendiculaire à cet axe, un élément intermédiaire (4) possédant un plan d'assemblage supérieur perpendiculaire à son axe de référence et un plan d'assemblage inférieur formant avec l'axe de référence un angle identique à celui formé par le plan supérieur de l'élément fixe (3) avec l'axe de référence dudit élément, un moyen d'assemblage (10) permettant la rotation de l'élément intermédiaire (4) par rapport à l'élément fixe (3), et un moyen d'assemblage (6) permettant la rotation relative de l'élément support de charge (2) par rapport à l'élément intermédiaire (4), un moyen d'entraînement (12) en rotation relative de l'élément support de charge (2) à l'élément intermédiaire (4), un moyen (29) de solidariser l'élément intermédiaire (4) à l'élément fixe (3), caractérisé en ce qu'il comporte en outre, un moyen (16) de solidariser l'élément support de charge (2) à l'élément fixe (3) le moyen d'entraînement (12) étant utilisé pour le déplacement relatif de l'élément intermédiaire (4) par rapport aux éléments, fixe (3) et support de charge mobile angulairement (2), lorsque ces deux derniers éléments sont solidaires l'un de l'autre.

2. Dispositif suivant la revendication 1, caractérisé en ce qu'il comporte en outre un moyen d'analyse (14) de la rotation relative de l'élément support mobile angulairement (2) par rapport à l'élément intermédiaire (4).

3. Dispositif suivant l'une des revendications 1 ou 2, caractérisé en ce que le moyen d'analyse de la rotation de l'élément support mobile angulairement (2) est utilisé pour l'analyse de la position angulaire de l'élément intermédiaire (4) par rapport à l'élément support mobile angulairement (2) lorsque celui-ci est solidaire de l'élément fixe (3).

4. Dispositif suivant l'une des revendications 1 à 3 caractérisé en ce que le moyen d'assemblage entre l'élément intermédiaire (4) et les éléments, fixe (3) et support mobile angulairement (2) est constitué par des paliers.

5. Dispositif suivant l'une des revendications 1 à 3, caractérisé en ce que le moyen d'assemblage entre l'élément intermédiaire (4) et les éléments, fixe (3) et support mobile angulairement (2) est un palier lisse.

6. Dispositif suivant l'une des revendications 1 à 3, caractérisé en ce que le moyen d'assemblage entre l'élément intermédiaire (4) et les éléments, fixe (3) et support mobile angulairement (2), est un montage de galets, tournant dans des supports solidaires d'un élément et roulant dans une glissière solidaire de l'élément adjacent.

7. Dispositif suivant l'une des revendications 1 à 6, caractérisé en ce que le moyen d'entraînement de l'élément mobile angulairement (2), en rotation relative par rapport à l'élément intermédiaire (4), comprend un élément moteur (12), fixé sur l'élément intermédiaire (4) et équipé d'un pignon denté (13) engrenant avec une couronne dentée (7) solidaire de l'élément support mobile angulairement (2).

8. Dispositif suivant l'une des revendications 1 à 6, caractérisé en ce que le moyen d'entraînement de l'élément support mobile angulairement (2), en rotation relative par rapport à l'élément intermédiaire (4), comprend un élément moteur (12) fixé sur l'élément support mobile angulairement (2) et équipé d'un pignon denté (13) engrenant avec une roue dentée solidaire de l'élément intermédiaire (4).

9. Dispositif suivant l'une des revendications 1 à 8, caractérisé en ce que l'élément moteur (12) est un motoréducteur ou un moteur électriques.

10. Dispositif suivant l'une des revendications 1 à 8, caractérisé en ce que l'élément moteur est un moteur hydraulique.

11. Dispositif suivant l'une des revendications 1 à 8, caractérisé en ce que l'élément moteur est manuel.

12. Dispositif suivant l'une des revendications 1 à 11, caractérisé en ce que le moyen d'analyse de la rotation de l'élément support mobile angulairement (2) est un élément de mesure rotatif (14), fixé sur le même élément (2 ou 4), que l'élément moteur (12) et équipé d'un pignon denté (15) engrenant avec la couronne dentée d'entraînement (7) de l'élément adjacent, (4 ou 2), ou avec une roue dentée particulière solidaire de la couronne dentée d'entraînement.

13. Dispositif suivant l'une des revendications 1 à 12, caractérisé en ce que le moyen permettant de solidariser l'élément support mobile angulairement (2) et l'élément fixe (3) est un frein à ruban (16), situé dans le plan de l'axe d'assemblage de ces deux éléments, fixé sur l'élément fixe (3) et s'enroulant sur un tambour de l'élément support mobile angulairement (2).

14. Dispositif suivant l'une des revendications 1 à 12, caractérisé en ce que le moyen permettant de solidariser l'élément support mobile angulairement (2) et l'élément fixe (3) est un frein à machoires flexibles (27) fixé sur l'élément fixe (3) et s'enroulant sur un tambour solidaire de l'élément support mobile angulairement (2).

15. Dispositif suivant l'une des revendications 1 à 12, caractérisé en ce que le moyen de solidariser l'élément support mobile angulairement (2) et l'élément fixe (3) est un frein à mâchoires rigides, fixé élastiquement ou articulé sur l'élément fixe (3), dont les mâchoires serrent le tambour de l'élément support mobile angulairement (2).

16. Dispositif suivant l'une des revendications 1 à 12, caractérisé en ce que le moyen de solidariser l'élément support mobile angulairement (2) et l'élément fixe (3) est un pène, fixé sur l'un des éléments, s'engageant dans une gâche, fixée sur l'autre élément.

17. Dispositif suivant l'une des revendications 1 à 12, caractérisé en ce que le moyen de solidariser l'élément support mobile angulairement (2) et l'élément fixe est une association d'un frein avec un système pène-gâche.

18. Dispositif suivant l'une des revendications 1 à 12, caractérisé en ce que le moyen de solidariser l'élément support mobile angulairement (2) et l'élément fixe consiste à utiliser un verrouillage (30), normalement destiné à solidariser la charge (1) et l'élément fixe (3).

19. Dispositif suivant l'une des revendications 1 à 18, caractérisé en ce que le moyen de solidariser l'élément intermédiaire (4) et l'élément fixe (3) est au moins un pène (29), fixé sur l'un des deux éléments, s'engageant alternativement dans au moins une gâche fixée sur l'autre élément.

20. Dispositif suivant l'une des revendications 1 à 18, caractérisé en ce que le moyen de solidariser l'élément intermédiaire (4) et l'élément fixe (3) est un frein à disque.

21. Dispositif suivant l'une des revendications 1 à 18, caractérisé en ce que le moyen de solidariser l'élément intermédiaire (4) et l'élément fixe (3) est un des moyens utilisés pour solidariser l'élément support mobile angulairement (2) et l'élément fixe (3).

22. Dispositif suivant l'une des revendications 13 à 17, 20 et 21, caractérisé en ce que les actionneurs (17) et (23) du pène et du frein sont manuels.

23. Dispositif suivant l'une des revendications 13 à 17, 20 et 21, caractérisé en ce que les actionneurs (17) et (23) du pène et du frein sont électromagnétiques.

24. Dispositif suivant l'une des revendications 13 à 17, 20 et 21, caractérisé en ce que les actionneurs (17) et (23) du pène et du frein sont hydrauliques.

25. Dispositif suivant l'une des revendications 13 à 17, 20 et 21, caractérisé en ce que les actionneurs (17) et (23) du pène et du frein sont pneumatiques.

## Claims

1. Device for the angular orientation and positioning of the axis of rotation of an intermittently rotating load (1), comprising a fixed base element (3) having a reference axis and an upper assembly plane which is not perpendicular relative to this axis, an angularly movable load-supporting element (2) having an axis of rotation and a lower assembly plane perpendicular relative to this axis, an intermediate element (4) having an upper assembly plane perpendicular relative to its reference axis and a lower assembly plane forming with the reference axis an angle identical to that formed by the upper plane of the fixed element (3) with the reference axis of the said element, an assembly means (10) allowing the intermediate element (4) to rotate relative to the fixed element (3), and an assembly means (6) allowing the relative rotation of the load-supporting element (2) in relation to the intermediate element (4), a means (12) for driving the load-supporting element (2) in relative rotation in relation to the intermediate element (4), and a means (25) for firmly securing the intermediate element (4) to the fixed element (3), characterized in that it also possesses a means (16) for firmly securing the load-supporting element (2) to the fixed element (3), the drive means (12) being used for the relative movement of the intermediate element (4) in relation to the fixed element (3) and angularly movable load-supporting element (2) when these last two elements are firmly secured to one another.

2. Device according to Claim 1, characterized in that it also possesses a means (14) for analysing the relative rotation of the angularly movable supporting element (2) in relation to the intermediate element (4).

3. Device according to one of Claims 1 or 2, characterized in that the means for analysing the rotation of the angularly movable supporting element (2) is used to analyse the angular position of the intermediate element (4) in relation to the angularly movable supporting element (2) when the latter is firmly secured to the fixed element (3).

4. Device according to one of Claims 1 to 3, characterized in that the means of assembly between the intermediate element (4) and the fixed element (3) and angularly movable supporting element (2) consists of bearings.

5. Device according to one of Claims 1 to 3, characterized in that the means of assembly between the intermediate element (4) and the fixed element (3) and angularly movable supporting element (2) is a plain bearing.

6. Device according to one of Claims 1 to 3, characterized in that the means of assembly between the intermediate element (4) and the fixed element (3) and angularly movable supporting element (2) is an arrangement of rollers rotating in supports firmly secured to one element and rolling in a slideway firmly secured to the adjacent element.

7. Device according to one of Claims 1 to 6, characterized in that the means for driving the angularly movable element (2) in relative rotation in relation to the intermediate element (4) comprises a motor element (12) fastened to the intermediate element (4) and equipped with a toothed pinion (13) meshing with a toothed ring (7) firmly secured to the angularly movable supporting element (2).

8. Device according to one of Claims 1 to 6, characterized in that the means for driving the angularly movable supporting element (2) in relative rotation in relation to the intermediate element (4) comprises a motor element (12) fastened to the angularly movable supporting element (2) and equipped with a toothed pinion (13) meshing with a gearwheel firmly secured to the intermediate element (4).

9. Device according to one of Claims 1 to 8, characterized in that the motor element (12) is a geared motor or an electric motor.

10. Device according to one of Claims 1 to 8, characterized in that the motor element is a hydraulic motor.

11. Device according to one of Claims 1 to 8, characterized in that the motor element is manual.

12. Device according to one of Claims 1 to 11, characterized in that the means for analysing the rotation of the angularly movable supporting element (2) is a rotary measuring element (14) fastened to the same element (2 or 4) as the motor element (12) and equipped with a toothed pinion (15) meshing with the toothed drive ring (7) of the adjacent element (4 or 2) or with a special gearwheel firmly secured to the toothed drive ring.

13. Device according to one of Claims 1 to 12, characterized in that the means allowing the angularly movable supporting element (2) and the fixed element (3) to be firmly secured to one another is a band brake (16) which is arranged in the plane of the axis of assembly of these two elements and is fastened to the fixed element (3) and which winds round a drum of the angularly movable supporting element (2).

14. Device according to one of Claims 1 to 12, characterized in that the means allowing the angularly movable supporting element (2) and the fixed element (3) to be firmly secured to one another is a flexiblejaw brake (27) which is fastened to the fixed element (3) and which winds round a drum firmly secured to the angularly movable supporting element (2).

15. Device according to one of Claims 1 to 12, characterized in that the means for firmly securing the angularly movable supporting element (2) and the fixed element (3) to one another is a rigid jaw brake which is fastened elastically to or articulated on the fixed element (3) and the jaws of which clamp the drum of the angularly movable supporting element (2).

16. Device according to one of Claims 1 to 12, characterized in that the means for firmly securing the angularly movable supporting element (2) and the fixed element (3) to one another is a latch which is fastened on one of the elements and which engages into a keeper fastened to the other element.

17. Device according to one of Claims 1 to 12, characterized in that the means for firmly securing the angularly movable supporting element (2) and the fixed element to one another is a combination of a brake with a latch/keeper system.

18. Device according to one of Claims 1 to 12, characterized in that the means for firmly securing the angularly movable supporting element (2) and the fixed element to one another involves using a locking device (30) which is normally intended for firmly securing the load (1) and the fixed element (3) to one another.

19. Device according to one of Claims 1 to 18, characterized in that the means for firmly securing the intermediate element (4) and the fixed element (3) to one another is at least one latch (29) which is fastened to one of the two elements and which engages alternately into at least one keeper fastened to the other element.

20. Device according to one of Claims 1 to 18, characterized in that the means for firmly securing the intermediate element (4) and the fixed element (3) to one another is a disk brake.

21. Device according to one of Claims 1 to 18, characterized in that the means for firmly securing the intermediate element (4) and the fixed element (3) to one another is one of the means used for firmly securing the angularly movable supporting element (2) and the fixed element (3) to one another.

22. Device according to one of Claims 13 to 17, 20 and 21, characterized in that the actuators (17) and (23) of the latch and of the brake are manual.

23. Device according to one of Claims 13 to 17, 20 and 21, characterized in that the actuators (17) and (23) of the latch and of the brake are electromagnetic.

24. Device according to one of Claims 13 to 17, 20 and 21, characterized in that the actuators (17) and (23) of the latch and of the brake are hydraulic.

25. Device according to one of Claims 13 to 17, 20 and 21, characterized in that the actuators (17) and (23) of the latch and of the brake are pneumatic.

**Patentansprüche**

1. Vorrichtung zur Orientierung und Winkeleinstellung der Drehachse einer intermittierend drehenden Last (1), mit einem feststehenden Basiselement (3) mit einer Bezugsachse und einer zu dieser nicht senkrechten oberen Montageebene, mit einem winkelbeweglichen Tragelement (2) für die Last mit einer Rotationsachse und zu dieser senkrechten unteren Montageebene, mit einem Zwischenelement (4) mit einer zu seiner Bezugsachse senkrechten oberen Montageebene und einer unteren Montageebene, die mit der Bezugsachse einen Winkel bildet, der mit dem Winkel zwischen der oberen Montageebene des feststehenden Elements (3) und dessen Bezugsachse übereinstimmt, mit einem Führungsmittel (10), das das Drehen des Zwischenelements (4) gegenüber dem feststehenden Element (3) ermöglicht, und einem Führungsmittel (6), das eine relative Drehung des Tragelements (2) gegenüber dem Zwischenelement (4) ermöglicht, mit einer Antriebseinrichtung (12) für die relative Drehung des Tragelements (2) gegenüber dem Zwischenelement (4), sowie mit einem Mittel (25) zur Herbeiführung einer festen Verbindung zwischen dem Zwischenelement (4) und dem feststehenden Element (3), dadurch gekennzeichnet, daß ferner ein Mittel (16) zur Herbeiführung einer festen Verbindung zwischen dem Tragelement (2) und dem feststehenden Element (3) vorgesehen ist, und daß die Antriebseinrichtung (12) für die Relativbewegung des Zwischenelements (4) gegenüber dem feststehenden Element (3) und dem winkelbeweglichen Tragelement (2) dient, wenn die beiden letztgenannten Elemente miteinander fest verbunden sind.

2. Vorrichtung nach Anspruch 1, gekennzeichnet durch eine Einrichtung (14) zum Analysieren der Drehung des winkelbeweglichen Tragelements (2) relativ zu dem Zwischenelement (4) vorgesehen ist.

3. Vorrichtung nach einem der Ansprüche 1 oder 2, dadurch gekennzeichnet, daß die Einrichtung zum Analysieren der Drehung des winkelbeweglichen Tragelements (2) für die Analyse der Winkelposition des Zwischenelements (4) relativ zu dem winkelbeweglichen Tragelement (2) verwendet wird, wenn dieses mit feststehenden Element (3) fest verbunden ist.

4. Vorrichtung nach einem der Ansprüche 1 bis 3, dadurch gekennzeichnet, daß das zwischen dem Zwischenelement (4) und dem feststehenden (3) und dem winkelbeweglichen Tragelement (2) angeordnete Führungsmittel aus Lagern besteht.

5. Vorrichtung nach einem der Ansprüche 1 bis 3, dadurch gekennzeichnet, daß das zwischen dem Zwischenelement (4) und dem feststehenden (3) und dem winkelbeweglichen Tragelement (2) angeordnete Führungsmittel ein Gleitlager ist.

6. Vorrichtung nach einem der Ansprüche 1 bis 3, dadurch gekennzeichnet, daß das zwischen dem Zwischenelement (4) und dem feststehenden (3) und dem winkelbeweglichen Tragelement (2) angeordnete Führungsmittel eine Anordnung von Wälzkörpern ist, die sich in mit einem der Elemente fest verbundenen Haltern drehen und in einer mit dem benachbarten Element fest verbunden Gleitbahn abrollen.

7. Vorrichtung nach einem der Ansprüche 1 bis 6, dadurch gekennzeichnet, daß die Antriebseinrichtung für die relative Drehung des winkelbeweglichen Elements (2) gegenüber dem Zwischenelement (4) ein Antriebselement (12) aufweist, das an dem Zwischenelement (4) befestigt und mit einem Zahnritzel (13) ausgestattet ist, das mit einem mit dem winkelbeweglichen Tragelement (2) fest verbundenen Zahnkranz (7) kämmt.

8. Vorrichtung nach einem der Ansprüche 1 bis 6, dadurch gekennzeichnet, daß die Antriebseinrichtung für die relative Drehung des winkelbeweglichen Elements (2) gegenüber dem Zwischenelement (4) ein Antriebselement (12) aufweist, das an dem winkelbeweglichen Tragelement (2) befestigt und mit einem Zahnritzel (13) ausgestattet ist, das mit einem mit dem Zwischenelement (4) fest verbundenen Zahnkranz kämmt.

9. Vorrichtung nach einem der Ansprüche 1 bis 8, dadurch gekennzeichnet, daß das Antriebselement (12) ein Getriebemotor oder ein Elektromotor ist.

10. Vorrichtung nach einem der Ansprüche 1 bis 8, dadurch gekennzeichnet, daß das Antriebselement ein hydraulischer Motor ist.

11. Vorrichtung nach einem der Ansprüche 1 bis 8, dadurch gekennzeichnet, daß das Antriebselement ein manuell betätigtes Element ist.

12. Vorrichtung nach einem der Ansprüche 1 bis 11, dadurch gekennzeichnet, daß die Einrichtung zum Analysieren der Drehung des winkelbeweglichen Tragelements (2) ein Drehmeßelement (14) ist, das an demselben Element (2 bzw. 4) befestigt ist wie das Antriebselement (12) und mit einem Zahnritzel (15) ausgestattet ist, das mit dem Zahnkranz (7) für den Antrieb des benachbarten Elements (4 bzw. 2) oder mit einem mit diesem drehfest gekuppelten speziellen Zahnrad kämmt.

13. Vorrichtung nach einem der Ansprüche 1 bis 12, dadurch gekennzeichnet, daß das Mittel, das die feste Verbindung des winkelbeweglichen Tragelements (2) und des feststehenden Elements (3) ermöglicht, eine Bandbremse (16) ist, die in der Ebene der Montageachse dieser beiden Elemente liegt, an dem feststehenden Element (3) befestigt ist und eine Trommel des winkelbeweglichen Elements (2) umschlingt.

14. Vorrichtung nach einem der Ansprüche 1 bis 12, dadurch gekennzeichnet, daß das Mittel, das die feste Verbindung des winkelbeweglichen Tragelements (2) und des feststehenden Elements (3) ermöglicht, eine Bremse (27) mit bewegbaren Backen ist, die an dem feststehenden Element (3) befestigt ist und eine mit dem winkelbeweglichen Tragelement (3) fest verbundene Trommel des winkelbeweglichen Elements (2) umschlingt.

15. Vorrichtung nach einem der Ansprüche 1 bis 12, dadurch gekennzeichnet, daß das Mittel zur Herbeiführung einer festen Verbindung zwischen dem winkelbeweglichen Tragelement (2) und dem feststehenden Element (3) eine Bremse mit starren Backen ist, die an dem feststehenden Element (3) elastisch oder gelenkig befestigt ist und dessen Backen die Trommel des winkelbeweglichen Tragelements (2) umspannen.

16. Vorrichtung nach einem der Ansprüche 1 bis 12, dadurch gekennzeichnet, daß das Mittel zur Herbeiführung einer festen Verbindung zwischen dem winkelbeweglichen Tragelement (2) und dem feststehenden Element (3) ein an einem der Elemente befestigter Riegel ist, der in eine an dem anderen Element befestigte Riegelöffnung eingreift.

17. Vorrichtung nach einem der Ansprüche 1 bis 12, dadurch gekennzeichnet, daß das Mittel zur Herbeiführung einer festen Verbindung zwischen dem winkelbeweglichen Tragelement (2) und dem feststehenden Element eine Kombination aus einer Bremse und einem aus Riegel und Riegelöffnung bestehenden Schließsystem ist.

18. Vorrichtung nach einem der Ansprüche 1 bis 12, dadurch gekennzeichnet, daß das Mittel zur Herbeiführung einer festen Verbindung zwischen dem winkelbeweglichen Tragelement (2) und dem feststehenden Element (3) in der Verwendung einer Verriegelung (30) besteht, die normalerweise dazu dient, die Last (1) und das feststehende Element (3) miteinander zu verbinden.

19. Vorrichtung nach einem der Ansprüche 1 bis 18, dadurch gekennzeichnet, daß das Mittel zur Herbeiführung einer festen Verbindung zwischen dem Zwischenelement (4) und dem feststehenden Element (3) aus wenigstens einem an einem der beiden Elemente befestigten Riegel (29) besteht, der wechselweise in wenigstens eine an dem anderen Element befestigte Riegelöffnung eingreift.

20. Vorrichtung nach einem der Ansprüche 1 bis 18, dadurch gekennzeichnet, daß das Mittel zur Herbeiführung einer festen Verbindung zwischen dem Zwischenelement (4) und dem feststehenden Element (3) eine Scheibenbremse ist.

21. Vorrichtung nach einem der Ansprüche 1 bis 18, dadurch gekennzeichnet, daß das Mittel zur Herbeiführung einer festen Verbindung zwischen dem Zwischenelement (4) und dem feststehenden Element (3) eines der Mittel ist, die zur Festlegung des winkelbeweglichen Tragelements (2) an dem feststehenden Element (3) dienen.

22. Vorrichtung nach einem der Ansprüche 13 bis 17, 20 und 21, dadurch gekennzeichnet, daß die Betätigungsorgane (17 und 23) der Riegelfalle (29) und der Bremse manuelle Betätigungsorgane sind.

23. Vorrichtung nach einem der Ansprüche 13 bis 17, 20 und 21, dadurch gekennzeichnet, daß die Betätigungsorgane (17 und 23) der Riegelfalle (29) und der Bremse elektromagnetische Betätigungsorgane sind.

24. Vorrichtung nach einem der Ansprüche 13 bis 17, 20 und 21, dadurch gekennzeichnet, daß die Betätigungsorgane (17 und 23) der Riegelfalle (29) und der Bremse hydraulische Betätigungsorgane sind.

25. Vorrichtung nach einem der Ansprüche 13 bis 17, 20 und 21, dadurch gekennzeichnet, daß die Betätigungsorgane (17 und 23) der Riegelfalle (29) und der Bremse pneumatische Betätigungsorgane sind.

FIG. 1

FIG. 2

FIG. 3

FIG. 4

FIG. 5

FIG. 6

FIG. 7

FIG. 8

FIG. 9

## FIG. 10